# EUROPÄISCHE PATENTSCHRIFT

(11) **EP 1 022 923 B1**
(45) Veröffentlichungstag und Bekanntmachung des Hinweises auf die Patenterteilung: **17.12.2008**
(21) Anmeldenummer: 00100863.0
(22) Anmeldetag: 18.01.2000
(51) Int. Cl.: H04Q 9/00

(54) **Verfahren zur Erfassung und Verarbeitung von verkehrstelematischen Daten**
METHOD FOR COLLECTING AND PROCESSING OF TELEMATIC TRAFFIC DATA
METHODE D'ACQUISITION ET DE TRAITEMENT DE DONNEES DE TRAFIC TELEMATIQUE

(30) Priorität: 21.01.1999 DE 19902364
(43) Veröffentlichungstag der Anmeldung: 26.07.2000
(73) Patentinhaber: T-Mobile Deutschland GmbH, 53227 Bonn (DE)
(72) Erfinder: Keller, Walter, 40880 Ratingen (DE)
(74) Vertreter: Riebling, Peter

(56) Entgegenhaltungen:
- EP-A- 0 911 779
- US-A- 5 663 720
- US-A- 5 862 244
- PATENT ABSTRACTS OF JAPAN Bd. 1996, Nr. 12, 26. Dezember 1996 (1996-12-26) & JP 08 221685 A (MITSUBISHI HEAVY IND LTD), 30. August 1996 (1996-08-30)
- BECKER U J: "Automatic traffic data collection using aerial video images" ROAD TRAFFIC MONITORING, 1989., SECOND INTERNATIONAL CONFERENCE ON LONDON, UK, LONDON, UK,IEE, UK, 1989, Seiten 79-83, XP006518033 ISBN: 0-85296-373-4

## Beschreibung

Die Erfindung betrifft ein Verfahren zur Erfassung und Verarbeitung von verkehrstelematischen Daten nach dem Oberbegriff des Patentanspruchs 1.

Es existieren unterschiedliche Verfahren zur Erfassung und Verarbeitung von Verkehrsprofilen auf Straßen und Autobahnen. Das am weitesten verbreitete System besteht in der fernmündlichen Mitteilung von Verkehrsinformationen, insbesondere von Stau- und Unfallmeldungen, durch institutionalisierte Stellen (Polizei, Straßenverkehrswacht, ADAC etc.) oder Privatpersonen an eine entsprechende zentrale Stelle, wo diese Informationen gesammelt, verwaltet und verwertet werden, beispielsweise durch Abstrahlung entsprechender Hinweise über Rundfunksender.

Weiterhin werden derzeit im Bereich der Bundesautobahnen Sensoren zwecks automatischer Erfassung von Fahrzeuggeschwindigkeit und Fahrzeuganzahl pro Zeiteinheit installiert. Teilweise sind diese Systeme bereits in Erprobung. Ziel dabei ist die automatische Erfassung der Verkehrsdichte, um hieraus Informationen, Meldungen und Umleitungsempfehlungen zu generieren.

Die Nachteile des erstgenannten Verfahrens liegen auf der Hand. Die Daten sind nicht vollständig und nicht zeitaktuell. Iosbesondere Prognosen über die Verkehrsentwicklung sind aufgrund fehlender Daten nicht zu erstellen. Da insbesondere Verkehrsprobleme gemeldet werden, existiert keine Aussagemöglichkeit zu etwaigen Umleitestrecken. So kann es sein, dass die Verkehrsproblematik auf empfohlenen Umleitungen schlimmer ist, als auf der vermeintlich betroffenen Strecke.

Für Verfahren zwei sind Anzahl und Dichte der Sensoren für die Datenerfassung ausschlaggebend. Die Sensoren erfordern eine bestimmte Positionierung zum Verkehrsfluss und müssen in der Regel über der Fahrbahn angebracht werden. Eine Installation in der Fahrbahn ist kommerziell sowie wegen der mit der Installation verbundenen Verkehrsbeeinträchtigung nicht zu vertreten. Neben dem erforderlichen erheblichen baulichen Aufwand, ist zumindest noch eine Spannungsversorgung vor Ort erforderlich. Hierzu sind entsprechende Leitungen zu verlegen. Zur Übertragung der Messergebnisse werden zur Vermeidung von ebenfalls diesbezüglich erforderlichen Leitungsnetzen meist funktechnische Übertragungsverfahren bevorzugt. Da der Installationsaufwand über der Fahrbahn ebenfalls sehr hoch ist, wird die Installation an Brücken bevorzugt. Dies stellt jedoch keine hinreichende Lösung dar, da nicht genügend Brückenbauten in der erforderlichen Dichte vorhanden sind. Man kann demnach davon ausgehen, dass die Sensoren in absehbarer Zukunft aus kommerziellen Gründen nicht flächendeckend in der für eine zuverlässige Verkehrsprognose erforderlichen Anzahl und Anordnung vorhanden sein werden.

Die Erfindung sucht einen Ausweg aus dieser Problematik unter Vermeidung des erforderlichen erdgebunden Sensornetzes mit seinen hohen Erstellungs- und Betriebskosten, dem großen Wartungs- und Pflegeaufwand sowie der langen Installationsdauer.

Das Dokument US-A-5 862 244 offenbart ein Verfahren und System zur Erfassung und Verarbeitung von verkehrstelematischen Daten, wobei zur Datenerfassung mindestens ein mit geeigneten Sensoren ausgerüstetes, nicht-erdgebundenes Erfassungssystem, beispielsweise ein Satellitensystem, verwendet wird. Die Satellitendaten werden an eine Bodenstation übertragen und dort verarbeitet.
US-A-5 663 720 offenbart ein Verfahren und System zur Erfassung und Verarbeitung von Verkehrsdaten, das auf der Verwendung von Doppler-Radar-Systemen basiert, die auf erhöhten Standorten auf der Erdoberfläche angeordnet werden.

JP 08 221 685 A offenbart ein Verkehrsüberwachungssystem und ein Verfahren zur Erfassung und Verarbeitung von verkehrstelematischen Daten, wobei zur Datenerfassung mindestens ein mit geeigneten Sensoren ausgerüstetes, nicht-erdgebundenes Erfassungssystem verwendet wird, wobei die Verarbeitung der erfassten Daten und eine direkte flächenhafte Ausstrahlung der verarbeiteten Daten an die berechtigten Verkehrsteilnehmer seitens des nicht-erdgebundenen Erfassungssystems erfolgt.

Der vorliegenden Erfindung liegt die Aufgabe zugrunde, ein Verfahren vorzuschlagen, auf dessen Basis eine verbesserte Erfassung und Verarbeitung von verkehrstelematischen Daten, insbesondere eine verbesserte Erfassung von Verkehrsprofilen auf Straßen und Autobahnen zwecks zuverlässiger Iststandsanalyse, verbesserter Verkehrsprognosen sowie daraus resultierender Verkehrsinformationen und Verkehrslenkungen möglich ist, wobei auf die zeit- und kostenaufwendige Installation von Straßensensoren und separaten Daten verarbeitenden Systemen verzichtet werden soll.

Gelöst wird diese Aufgabe durch die kennzeichnenden Merkmale des Patentanspruchs 1.

Das erfindungsgemäße Verfahren geht davon aus, dass zur Datenerfassung keine erdgebundene, stationäre Sensortechnik, sondern ein nicht erdgebundenes, vorzugsweise satellitengestütztes Verfahren verwendet wird, wobei im Sinne der Erfindung alle Verfahrensweisen zu verstehen sind, bei denen entsprechende Sensoren zur Erfassung der Verkehrssituation auf innerhalb der Erdatmosphäre fliegenden Systemen (Flugzeuge, Ballone o.ä.), in höheren Atmosphärenschichten quasistationär verankerten Systemen (beispielsweise Stratosphärenplattformen o. ä.) oder in Erdumlaufbahnen befindlichen Satellitensystemen beliebiger Orbitalhöhe verwendet werden. Zur vereinfachten Sprachweise werden die möglichen Anwendungsfälle unter dem Oberbegriff satellitengestütztes System zusammengefasst. Die Erfindung sieht vor, dass die komplette Verkehrsanalyse und Aufbereitung der sendefähigen Verkehrsmeldungen und Umleitungsempfehlungen samt direkter flächenhafter Ausstrahlung an die berechtigten Verkehrsteilnehmer seitens des nicht-erdgebundenen Systems erfolgt. Somit ergibt sich eine sehr genaue und schnelle Erfassung und Analyse des Verkehrsgeschehens und insbesondere eine unverzügliche Weitergabe der Informationen an die Verkehrsteilnehmer oder andere Instanzen. Ferner werden die komplette automatische Auswertung von Unfall- und Gefahrensituationen samt Einleitung der notwendigen Melde- und Infomationsmaßnahmen sowie die Verkehrsflusssteuerung seitens des Systems durchgeführt und die entsprechenden Daten samt zusätzlicher Informationen, wie Slider o.ä., an autorisierte Stellen (Polizei etc.) übertragen.

Neben den Vorteilen im Installations- und Betriebsbereich ergeben sich zusätzliche Vorteile bei der Auswertung und Analyse der Daten. So können insbesondere bei satellitengestützten Systemen die vorliegenden Daten, falls nicht schon vorhanden, in grafische Datensätze überführt werden, die dann computergestützt ausgewertet werden können. Dabei ergeben sich, beispielsweise sowohl Fahrzeugdichte als auch Fließgeschwindigkeit durch inkrementative Erfassung einer bestimmten Position (scannen) in zwei aufeinanderfolgenden Zeiträumen und durch Messung der zurückgelegten Strecke der Fahrzeuge. Dabei werden vorzugsweise Methoden der Mustererkennung und Bildverarbeitung sowie mathematische Methoden, wie Korrelationsverfahren, insbesondere auch im Verhältnis der in Bewegung befindlichen Fahrzeuge zur ortsfesten Umgebung kombiniert, ohne dass für jedes einzelne Fahrzeug komplexe individuelle Berechnungen durchgeführt werden oder individuell getrennte Bewegungsprofile ermittelt werden müssen.

Als Sensoren zur Datenerfassung eignen sich anwendungsspezifisch aktive oder passive optische Erfassungseinrichtungen im sichtbaren oder unsichtbaren spektralen Bereich (Kameras, Infrarotsensoren) bzw. die aktive oder passive Verwendung von Frequenzen im Bereich der elektromagnetischer Felder und Wellen (Radar). Durch den Einsatz entsprechender Optiken lässt sich - sofern erforderlich - auch bei satellitengestützten Systemen mit großer Orbitalhöhe eine Detailauflösung in der Größenordnung eines Fahrzeuges erreichen.

In einer bevorzugten Ausführungsform werden die ortsabhängig zu erfassenden verkehrstelematischen Daten jeweils geometrischen Bereichen, wie beispielsweise Straßenzügen, Autobahnen, Stadteilen, nicht in festgelegter Form einer optischen Maske, einer besonderen Ausführung der Antenne/des Sensors o. ä. zugeordnet, sondern werden durch individuell programmierbare Festlegung der jeweiligen geometrischen Bereiche ausgewählt, wobei die geometrischen Bereiche innerhalb der Erfassungsbereiche von ausrichtbaren (Sensor-) Einrichtungen mit kleinem Erfassungswinkel (Spot Beam o.ä.) bzw. innerhalb des Erfassungsbereiches zumindest einer flächenhaften Erfassungseinrichtung (z.B. Kamera) liegen. Das heißt z.B. bei einem von einer Kamera aufgezeichneten Gesamtbild, bestehend z.B. aus einem Raster von einzelnen Bildpunkten, können individuelle Bereiche, z.B. Straßenzüge, gezielt betrachtet und das entsprechenden Verkehrsaufkommen erfasst und ausgewertet werden.

Durch die individuelle Festlegung der ortsabhängigen Datenerfassungsbereiche ist gemäß einer Ausbildung der Erfindung eine individuelle ortsbezogene Erfassung der Telemetriedaten, beispielsweise durch das Scannen vorgegebener Bereiche bzw. durch die Herausfilterung (Selektion) der relevanten Daten aus einem etwaig vorhandenen Gesamtdatenbestand einer flächenhaften rasterförmigen Datenerfassung, möglich, wodurch ein hochauflösendes Verfahren mit dynamisch konfigurierbarem Einsatzbereich bei gleichzeitiger Reduktion der im Vergleich zu einer flächenhaften Ermittlung vorliegenden Datenmenge realisierbar ist.

Die durch eine erfindungsgemäße nicht erdgebundene Sensorinstallation erzielbaren Vorteile liegen auf der Hand. Es entfällt der gesamte Installations- und Wartungsaufwand, wie er bei erdgebundenen Systemen notwendig ist. Weiterhin kann beim satellitengestützten Verfahren die ortsspezifische Komponente bei entsprechendem Design jederzeit im laufenden Betrieb geändert werden, dies gilt z.B. für die zu erfassenden Gebiete, die jederzeit neu definiert werden können. Ein weiterer Vorteil besteht in der universellen Anwendbarkeit beispielsweise auch für Gebiete, in denen wegen Unzugänglichkeit oder aufgrund geografischer oder morphologischer Verhältnisse keine erdgebundenen Sensoren installierbar bzw. wegen fehlender Leitungs- oder Funkverbindung betreibbar sind. Dies gilt sinngemäß auch für politische bzw. militärische Hindernisgründe.

Unter die betrieblichen Aspekte bekannter erdgebundener Systeme fallen auch Probleme der Systemzuverlässigkeit und der technologischen Erneuerung. Beides besitzt bei satellitengestützten Systemen lediglich einen kommerziellen Aspekt, wo hingegen bei einer sehr großen Anzahl sehr komplexer erdgebundener Systeme im Outdoorbereich mit einer hohen Ausfallrate (Reparaturrate) gerechnet werden muss. Das Problem eskaliert bei der Notwendigkeit technischer Verbesserungen beliebiger Art (Stromversorgung, Sensorbereich, Funktechnik, Netzbetreiber- und Dienstewahl der verwendeten Telekommunikationsnetze etc.). Zusätzlich muss von einem erheblichen Aufwand zur Erhaltung der Betriebsfähigkeit (Wartungsarbeiten, wie Reinigung von Sensoren, Solarzellen etc., Austausch von Akkumulatoren etc.) ausgegangen werden.

Das Auswerteverfahren kann zusätzlich vereinfacht werden, wenn bei der statistischen Verkehrsflussauswertung davon ausgegangen wird, dass sich die Position der einzelnen Fahrzeuge zueinander im fließenden Verkehr bezogen auf den Gesamtbestand an Fahrzeugen, von Ein- und Ausfahrten abgesehen, relativ wenig ändert. Durch diese Verfahren ist eine vereinfachte Verkehrsflussanalyse beispielsweise auch bei wellenartigem Stop & Go-Verkehr an den Stauenden (verursacht durch die Reaktionsgeschwindigkeit der Fahrer) möglich, die mit herkömmlichen Methoden nur sehr schwer zu erfassen und einer Ursache zuzuordnen sind.

Zusätzlich besteht beim erfindungsgemäßen satellitengestützten Systemen die Möglichkeit der optionalen Bildübermittlung bzw. der Bereitstellung beliebiger Zwischenergebnisse und optischer Präsentationen zur bedarfsweisen zusätzlichen manuellen menschlichen Auswertung einer Verkehrssituation mit bedarfsweiser Ursachenermittlung und Maßnahmenentscheidung. Diese Möglichkeit ist derzeit mit keinem anderen Verfahren gegeben, insbesondere wenn zur Ermittlung von Stausituationen bei Unfall unmittelbar beispielsweise aktuelle fotografische Aufnahmen des Unfallortes bereitgestellt werden. Die Übermittlung von fotografischen Aufnahmen oder alternativ von gleichwertigen, in einer optischen Präsentationsform grafisch aufbereiteten Daten einer alternativen Erfassungsart kann zur individuellen Analyse und Bewertung von Verkehrsszenarien verwendet werden.

Zusätzliche Anwendungsvorteile können dadurch erschlossen werden, dass zumindest technisch bei entsprechendem Auflösungsvermögen der Erfassungssensoren die Möglichkeit besteht, einzelne Fahrzeuge in ihrem Bewegungsprofil zu verfolgen. Hierzu ist beispielsweise lediglich die exakte Position zu einem definierten Ausgangszeitpunkt als Lokalisierungsbeginn erforderlich.

Die Erfindung wird unter Verwendung einer Zeichnungsfigur, die hier lediglich eine mögliche Ausführungsart in schematischer Darstellung beschreibt, erläutert, wobei sich anhand der Zeichnungsfigur weitere Anwendungsgebiete und Vorteile der Erfindung ergeben.

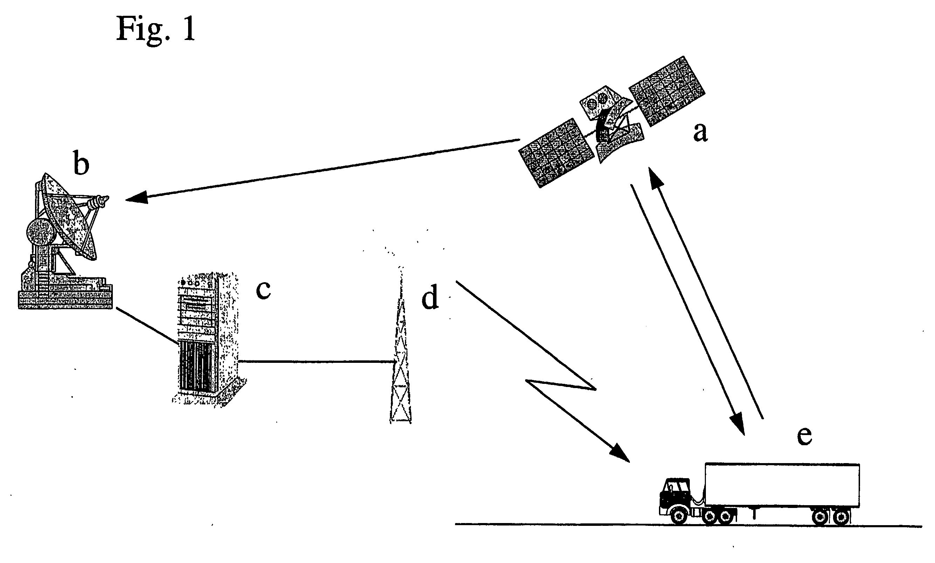

Fig. 1 zeigt ein erfindungsgemäßes nicht erdgebundenes Erfassungssystem in Form eines Telemetriesatelliten a, der beispielsweise mittels Radareinrichtung und/oder Kameras im optischen oder infraroten Bereich verkehrsbezogene Daten eines Fahrzeuges e und anderer Fahrzeuge ermittelt. Die Daten werden beispielgemäß vorverarbeitet an eine Empfangsstation b auf der Erde übermittelt. Die Empfangsstation b leitet die Daten zu einem Telemetriezentrum c weiter, wo die bedarfsgerechte komplette Aufbereitung der Satellitendaten erfolgt.

Anschließend erfolgt die Verwertung der aufbereiteten Verkehrsdaten , beispielsweise über eine Rundfunk- oder Mobilfunk-Sendestation d, welche entsprechende Verkehrsmitteilungen an die Fahrzeuge, darunter auch Fahrzeug e, sendet.

Alternativ wäre beispielsweise die vollautomatische komplette Bearbeitung der erfassten Daten im Satellitensystem a mit beispielsweise direkter Ausstrahlung über Digital Audio Broadcast an das Fahrzeug e und damit die Einsparung der Instanzen b, c und d möglich.

## Patentansprüche

1. Verfahren zur Erfassung und Verarbeitung von verkehrstelematischen Daten, wobei zur Datenerfassung mindestens ein mit geeigneten Sensoren ausgerüstetes, nicht-erdgebundenes Erfassungssystem (a) verwendet wird, wobei die Verarbeitung der erfassten Daten und eine direkte flächenhafte Ausstrahlung der verarbeiteten Daten an die berechtigten Verkehrsteilnehmer seitens des nicht-erdgebundenen Erfassungssystems (a) erfolgt,
**dadurch gekennzeichnet,**
**dass** die erfassten Daten in grafische Datensätze überführt werden, wobei insbesondere Methoden der Mustererkennung und Bildverarbeitung sowie mathematische Methoden, wie Korrelationsverfahren zur Auswertung herangezogen werden,
**dass** eine komplette Verkehrsanalyse und Aufbereitung von sendefähigen Verkehrsmeldungen und Umleitungsempfehlungen seitens des nicht-erdgebundenen Erfassungssystems (a) erfolgt, und
**dass** die komplette automatische Auswertung von Unfall- und Gefahrensituationen samt Einleitung der notwendigen Melde- und Informationsmaßnahmen sowie die Verkehrsflussteuerung seitens des nichterdgebundenen Erfassungssystems (a) durchgeführt werden und die entsprechenden Daten samt zusätzlicher Informationen an autorisierte Stellen übertragen werden.

2. Verfahren gemäß Anspruch 1, **dadurch gekennzeichnet, dass** als nichterdgebundenes Erfassungssystem (a) ein innerhalb der Erdatmosphäre fliegendes System und/oder ein in höheren Atmosphärenschichten quasistationär verankertes System und/oder ein in Erdumlaufbahnen befindliches Satellitensystem beliebiger Orbitalhöhe verwendet wird.

3. Verfahren gemäß Anspruch 1 oder 2, **dadurch gekennzeichnet, dass** die Datenerfassung unter Verwendung aktiver oder passiver optischer Erfassungseinrichtungen im sichtbaren oder unsichtbaren spektralen Bereich erfolgt.

4. Verfahren gemäß einem oder mehreren der vorangegangen Ansprüche, **dadurch gekennzeichnet, dass** die Datenerfassung unter Verwendung aktiver oder passiver Erfassungseinrichtungen im Bereich der elektromagnetischer Felder und Wellen erfolgt.

5. Verfahren gemäß einem oder mehreren der vorangegangen Ansprüche, **dadurch gekennzeichnet, dass** die ortsabhängig zu erfassenden verkehrstelematischen Daten jeweils geometrischen Bereichen zugeordnet und durch individuell programmierbare Festlegung der jeweiligen geometrischen Bereiche ausgewählt werden, welche Bereiche innerhalb der Erfassungsbereiche von ausrichtbaren Erfassungseinrichtungen mit kleinem Erfassungswinkel bzw. innerhalb des Erfassungsbereiches zumindest einer flächenhaften Erfassungseinrichtung liegen.

6. Verfahren gemäß einem oder mehreren der vorangegangenen Ansprüche, **dadurch gekennzeichnet, dass** durch eine individuelle Festlegung der ortsabhängigen Datenerfassungsbereiche eine individuelle ortsbezogene Erfassung der Telemetriedaten erfolgt, wodurch ein hochauflösendes Datenerfassungsverfahren mit dynamisch konfigurierbarem Einsatzbereich bei gleichzeitiger Reduktion der im Vergleich zu einer flächenhaften Ermittlung vorliegenden Datenmenge realisierbar ist.

7. Verfahren gemäß einem oder mehreren der vorangegangenen Ansprüche, **dadurch gekennzeichnet, dass** durch entsprechend programmierte Funktionalität die Lokalisierung und kontinuierliche Positionsverfolgung individueller Fahrzeuge (e) durchgeführt wird.

8. Verfahren gemäß einem oder mehreren der vorangegangenen Ansprüche, **dadurch gekennzeichnet, dass** die Übermittlung seitens des nichterdgebundenen Erfassungssystems (a) von fotografischen Aufnahmen oder alternativ in der optischen Präsentationsform gleichwertiger grafisch aufbereiteten Daten einer alternativen Erfassungsart zur individuellen Analyse und Bewertung von Verkehrsszenarien verwendet wird.

## Claims

1. Method for capturing and processing traffic telematics data, wherein for data capture at least one non-earthbound capture system (a) equipped with suitable sensors is used, wherein the processing of the captured data and direct wide-area radiation of the processed data to the authorised road users by the non-earthbound capture system (a) ensues, **characterised in that** the captured data are converted to graphic data sets, wherein in particular methods of pattern recognition and image processing as well as mathematical methods, such as correlation methods, are drawn upon for evaluation, that a complete traffic analysis and preparation of transmittable traffic bulletins and diversion recommendations by the non-earthbound capture system (a) ensues, and that the complete automatic evaluation of accident and hazard situations together with initiation of the necessary warning and information measures and traffic flow control are carried out by the non-earthbound capture system (a) and the corresponding data together with additional information are transmitted to authorised locations.

2. Method according to claim 1, **characterised in that** for the non-earthbound capture system (a) a system flying within the earth's atmosphere and/or a system anchored in quasi-stationary manner in upper atmospheric layers and/or a satellite system in earth orbit at any orbital height is used.

3. Method according to claim 1 or 2, **characterised in that** the data capture ensues using active or passive optical capture devices in the visible or invisible range of the spectrum.

4. Method according to one or more of the preceding claims, **characterised in that** the data capture ensues using active or passive capture devices in the range of electromagnetic fields and waves.

5. Method according to one or more of the preceding claims, **characterised in that** the location-dependent traffic telematics data to be captured are assigned in each case to geometric regions and are selected by individually programmable predefinition of the respective geometric regions, which regions lie within the capture ranges of orientable capture devices having a small capture angle or within the capture range of at least one wide-area capture device.

6. Method according to one or more of the preceding claims, **characterised in that** by means of an individual predefinition of the location-dependent data capture regions an individual location-related capture of the telemetry data ensues, as a result of which a high-resolution data capture method having a dynamically configurable operating range with simultaneous reduction of the data volume obtained in comparison with a wide-area determination is achievable.

7. Method according to one or more of the preceding claims, **characterised in that** by means of correspondingly programmed functionality the localisation and continuous positional tracking of individual vehicles (c) is carried out.

8. Method according to one or more of the preceding claims, **characterised in that** the transmission by the non-earthbound capture system (a) of photographic images or alternatively graphically processed data from an alternative type of capture that are equivalent in their optical form of presentation is used for the individual analysis and evaluation of traffic scenarios.

## Revendications

1. Procédé d'acquisition et de traitement de données de télématique routière, selon lequel on utilise pour l'acquisition de données au moins un système d'acquisition de données (a) équipé de capteurs appropriés et non terrestre, et que le traitement des données acquises et une diffusion directe, en surface, des données traitées aux usagers de la route autorisés se font du côté du système d'acquisition (a) non terrestre,
**caractérisé en ce que** les données acquises sont transformées en jeux de données graphiques, étant précisé que pour l'analyse on utilise en particulier des méthodes de reconnaissance de modèles et de traitement d'image ainsi que des méthodes mathématiques telles que des procédés de corrélation,
**en ce qu'**une analyse complète du trafic et un traitement de messages concernant le trafic aptes à être émis et de recommandations de déviation ont lieu du côté du système d'acquisition non terrestre (a), et
**en ce que** l'analyse automatique complète de situations d'accident et de danger, y compris la mise en oeuvre des mesures de signalisation et d'information nécessaires, et la commande du trafic sont effectuées du côté du système d'acquisition non terrestre (a), et les données correspondantes, avec des informations supplémentaires, sont transmises à des endroits autorisés.

2. Procédé selon la revendication 1, **caractérisé en ce qu'**on utilise comme système d'acquisition non terrestre (a) un système volant à l'intérieur de l'atmosphère terrestre et/ou un système ancré de manière quasi stationnaire dans des couches de l'atmosphère plus élevées et/ou un système satellite de n'importe quelle hauteur orbitale situé sur des orbites terrestres.

3. Procédé selon la revendication 1 ou 2, **caractérisé en ce que** l'acquisition de données se fait à l'aide de dispositifs d'acquisition optiques actifs ou passifs dans la zone spectrale visible ou invisible.

4. Procédé selon l'une au moins des revendications précédentes, **caractérisé en ce que** l'acquisition de données se fait à l'aide de dispositifs d'acquisition actifs ou passifs dans la zone des champs et ondes électromagnétiques.

5. Procédé selon l'une au moins des revendications précédentes, **caractérisé en ce que** les données de télématique routière à acquérir en fonction du lieu sont affectées à des zones géométriques et sont sélectionnées grâce à une fixation, programmable individuellement, des zones géométriques respectives, lesquelles zones sont situées à l'intérieur des zones d'acquisition de dispositifs d'acquisition orientables présentant une faible couverture angulaire ou à l'intérieur de la zone d'acquisition d'au moins un dispositif d'acquisition en surface.

6. Procédé selon l'une au moins des revendications précédentes, **caractérisé en ce que** grâce à une fixation individuelle des zones d'acquisition de données qui sont fonction de l'endroit a lieu une acquisition individuelle des données télémétriques qui est locale, moyennant quoi on peut réaliser un procédé d'acquisition de données à haute définition avec un domaine d'application pouvant faire l'objet d'une configuration dynamique, avec en même temps une réduction de la quantité de données qui sont présentes par rapport à une recherche en surface.

7. Procédé selon l'une au moins des revendications précédentes, **caractérisé en ce que** grâce à une fonctionnalité programmée en conséquence, on effectue la localisation et le suivi de position continu de véhicules individuels (e).

8. Procédé selon l'une au moins des revendications précédentes, **caractérisé en ce que** la transmission, côté système d'acquisition non terrestre (a), de relevés photographiques ou d'autres données d'un autre type d'acquisition qui sont équivalentes par leur forme de présentation optique et qui sont traitées graphiquement est utilisée pour l'analyse et l'évaluation individuelles de scénarios de trafic.
